# EUROPEAN PATENT SPECIFICATION

(11) **EP 4 443 535 B1**
(45) Date of publication and mention of the grant of the patent: **11.11.2026**
(21) Application number: 22918374.4
(22) Date of filing: 14.12.2022
(51) Int. Cl.: H01M 4/133, H01M 4/587, H01M 4/36, H01M 4/62, H01M 10/0525, H01M 4/02, H01M 4/38, H01M 4/134

(54) **NEGATIVE ELECTRODE PLATE AND BATTERY COMPRISING SAME**
NEGATIVELEKTRODENPLATTE UND BATTERIE DAMIT
PLAQUE D'ÉLECTRODE NÉGATIVE ET BATTERIE LA COMPRENANT

(30) Priority: 07.01.2022 CN 202210016118
(43) Date of publication of application: 09.10.2024
(73) Proprietor: Zhuhai CosMX Battery Co., Ltd., Zhuhai, Guangdong 519180 (CN)
(72) Inventor: HU, Dianyang, Zhuhai, Guangdong 519180 (CN); LI, Suli, Zhuhai, Guangdong 519180 (CN)
(74) Representative: Murgitroyd & Company
(86) International application number: PCT/CN2022/138937
(87) International publication number: WO 2023/130926

(56) References cited:
- EP-B1- 3 654 423
- WO-A1-2020/155993
- CN-A- 111 490 253
- CN-A- 114 497 440
- CN-U- 216 413 113
- JP-A- 2015 018 663

## Description

### TECHNICAL FIELD

The present invention pertains to the field of secondary battery technologies, and specifically relates to a negative electrode plate and a battery including the negative electrode plate.

### BACKGROUND

Since the commercialization of batteries, batteries have been widely used in fields such as digital, energy storage, power, military aerospace, and communications devices due to their high specific energy and good cycling performance. With extensive application of lithium-ion batteries, consumers have increasing requirements for a use environment, a charging speed, and an endurance time of lithium-ion batteries, and also have increasingly high requirements for an endurance capacity of an electronic device. Therefore, it is required that both rate performance and energy density should be taken into consideration for lithium-ion batteries. However, as a charging speed increases, in a case of large rate charging, a problem such as lithium deposition easily occurs on a negative electrode.

There are other patents that disclose that a negative electrode plate includes multiple layers of different negative active materials, such as WO2020/155993A1, EP3654423B1, CN216413113U and JP2015018663A, however their overall performance still need to be improved.

### SUMMARY

The invention is set out in the appended set of claims.

To overcome a disadvantage of the prior art, the present invention provides a negative electrode plate and a battery including the negative electrode plate. The negative electrode plate may improve rate performance and energy density of the battery, and effectively resolve the following problem: in a case of an electrode plate design with a large rate and high energy density, utilization rate of a negative electrode plate is low and lithium deposition occurs on a surface due to polarization and uneven electrolyte concentration, which affects use of the battery.

An objective of the present invention is implemented by using the following technical solutions:

A negative electrode plate, where the negative electrode plate includes a current collector, a first active material layer, and a second active material layer, the first active material layer is disposed on a surface of at least one side of the current collector, and the second active material layer is disposed on a surface of the first active material layer;
the first active material layer includes a first negative electrode active material, and a length-to-diameter ratio of the first negative electrode active material ranges from 3 to 5; and
the second active material layer includes a second negative electrode active material, and a length-to-diameter ratio of the second negative electrode active material ranges from 1 to 2.

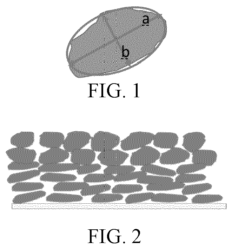

In the present invention, the length-to-diameter ratio refers to a ratio of a longest diameter (that is, a long axis of the negative electrode active material) a inside a negative electrode active material particle to a longest diameter b perpendicular to the longest diameter a. Specifically, as shown in FIG. 1, the length-to-diameter ratio may be obtained by using an image test software to characterize a scanning electron microscope "SEM" cross section of the negative electrode active material particle.

According to an implementation of the present invention, the length-to-diameter ratio of the first negative electrode active material is 3, 3.5, 4, 4.5, or 5, and the first negative electrode active material has a relatively large length-to-diameter ratio (ranging from 3 to 5). Therefore, the first negative electrode active material is arranged in order in a roll-pressing process of producing the negative electrode plate, and a pore between negative electrode active material particles is relatively small. This may effectively improve space utilization of the electrode plate and improve energy density of a battery cell. When the length-to-diameter ratio is excessively large (greater than 5), the pore between negative electrode active material particles becomes larger, which prevents liquid-phase transmission of lithium ions. When the length-to-diameter ratio is excessively small (less than 3), the pore between negative electrode active material particles becomes larger, which obviously reduces space utilization of the electrode plate and does not obviously improve energy density.

According to an implementation of the present invention, a long axis of the first negative electrode active material ranges from 5 µm to 15 µm, for example, 5 µm, 6 µm, 7 µm, 8 µm, 9 µm, 10 µm, 11 µm, 12 µm, 13 µm, 14 µm, 15 µm, or any point value within a range formed by every two of the foregoing point values.

When the long axis of the first negative electrode active material is excessively long (greater than 15 µm), rate performance of the battery deteriorates, resulting in lithium deposition. When the long axis of the first negative electrode active material is excessively short (less than 5 µm), energy density of the battery is not significantly improved.

According to an implementation of the present invention, a particle size Dv50 of the first negative electrode active material ranges from 5 µm to 15 µm.

According to an implementation of the present invention, the length-to-diameter ratio of the second negative electrode active material is 1.5, or 2, and the second negative electrode active material has a relatively small length-to-diameter ratio (ranging from 1.5 to 2). Therefore, a liquid-phase diffusion channel may be added on the second active material layer for lithium ions, which improves utilization of the electrode plate. When the length-to-diameter ratio is excessively large (greater than 2), liquid-phase transmission of lithium ions is prevented. When the length-to-diameter ratio is excessively small (less than 1.5 ), space utilization of the electrode plate is not high, and an effect of improving energy density is not obvious.

According to an implementation of the present invention, a long axis of the second negative electrode active material ranges from 15 µm to 25 µm, for example, 15 µm, 16 µm, 17 µm, 18 µm, 19 µm, 20 µm, 21 µm, 22 µm, 23 µm, 24 µm, 25 µm, or any point value within a range formed by every two of the foregoing point values.

When the long axis of the second negative electrode active material is excessively long (greater than 25 µm), rate performance of the battery deteriorates, resulting in lithium deposition. When the long axis of the second negative electrode active material is excessively short (less than 15 µm), energy density of the battery is not significantly improved.

According to an implementation of the present invention, a particle size Dv50 of the second negative electrode active material ranges from 15 µm to 25 µm.

According to an implementation of the present invention, a ratio h2/h1 of a thickness h2 of the second active material layer to a thickness h1 of the first active material layer is 0.1 ≤ h2/h1 ≤ 1. Research shows that when h2/h1 is 0.1 ≤ h2/h1 ≤ 1, not only rate performance may be met, but also energy density of the electrode plate may be improved. When h2/h1 is greater than 1, the second negative electrode active material is plenty, that is, there is a large quantity of large particles, and rate performance of the electrode plate is poor. When h2/h1 is less than 0.1, the second negative electrode active material is little, that is, there is a small quantity of large particles, and improvement on a surface porosity of the electrode plate is limited.

According to an implementation of the present invention, the thickness h1 of the first active material layer ranges from 10 µm to 100 µm.

According to an implementation of the present invention, the thickness h2 of the second active material layer ranges from 10 µm to 100 µm.

According to an implementation of the present invention, the first active material layer further includes a first conductive agent and a first binder.

According to an implementation of the present invention, the second active material layer further includes a second conductive agent and a second binder.

According to an implementation of the present invention, the first negative electrode active material and the second negative electrode active material are the same or different; and/or, the first conductive agent and the second conductive agent are the same or different; and/or, the first binder and the second binder are the same or different.

The first conductive agent and the second conductive agent are the same or different, and are independently selected from at least one of conductive carbon black, acetylene black, Keqin black, conductive graphite, conductive carbon fiber, carbon nanotube, or metal powder.

The first binder and the second binder are the same or different, and are independently selected from at least one of styrene-butadiene rubber "SBR", polyvinylidene fluoride "PVDF", polyacrylonitrile, polystyrene-acrylate, or polyacrylic acid ester.

The first negative electrode active material and the second negative electrode active material are the same or different, and are independently selected from at least one of graphite, soft carbon, hard carbon, silicon, silicon oxide, or silicon carbide.

According to an implementation of the present invention, a mass percentage of each component in the first active material layer is: 90 wt%-99 wt% first negative electrode active material, 0.5 wt%-10 wt% first conductive agent, and 0.5 wt%-10 wt% first binder.

Preferably, a mass percentage of each component in the first active material layer is as follows:

92 wt%-99 wt% first negative electrode active material, 0.5 wt%-4 wt% first conductive agent, and 0.5 wt%-4 wt% first binder.

According to an implementation of the present invention, a mass percentage of each component in the second active material layer is: 80 wt%-99 wt% second negative electrode active material, 0.5 wt%-10 wt% second conductive agent, and 0.5 wt%-10 wt% second binder.

Preferably, a mass percentage of each component in the second active material layer is as follows:

92 wt%-99 wt% second negative electrode active material, 0.5 wt%-4 wt% second conductive agent, and 0.5 wt%-4 wt% second binder.

The present invention further provides a method for preparing the foregoing negative electrode plate. The method includes the following steps:
(1) preparing a slurry for forming a first active material layer and a slurry for forming a second active material layer respectively; and
(2) applying the slurry for forming the first active material layer and the slurry for forming the second active material layer on surfaces of both sides of a current collector by using a double-layer coating machine, to obtain the negative electrode plate.

According to the present invention, in step (1), a solid content of the slurry for forming the first active material layer and that of the slurry for forming the second active material layer range from 30 wt% to 60 wt%. A viscosity of the slurry for forming the first active material layer and that of the slurry for forming the second active material layer range from 2000 mPa·s to 7000 mPa·s.

The present invention further provides a battery, where the battery includes the foregoing negative electrode plate.

According to the present invention, the battery is a lithium-ion battery.

The present invention has the following beneficial effects.:

The present invention provides a negative electrode plate and a battery that includes the negative electrode plate. Use of the negative electrode plate improves cycling performance of the battery under a large rate condition. An effective liquid-phase diffusion channel is constructed for lithium ions by using a combination of negative electrode active materials with different length-to-diameter ratios. This may significantly improve rate performance and energy density of a battery cell, and further resolve a problem of lithium deposition caused by a lower electric potential of the negative electrode plate near a surface of a separator.

### BRIEF DESCRIPTION OF THE DRAWINGS

To describe the technical solutions in embodiments of the present invention or related technologies more clearly, the following briefly describes the accompanying drawings required for describing embodiments of the present invention or the related technologies. Apparently, the accompanying drawings in the following description are merely some embodiments of the present invention.

FIG. 1 is a schematic structural diagram of a graphite particle according to the present invention.

FIG. 2 is a schematic structural diagram of a negative electrode plate described in a preferred solution of the present invention.

### DETAILED DESCRIPTION OF THE EMBODIMENTS

The following clearly describes the technical solutions in embodiments of the present invention with reference to the accompanying drawings in embodiments of the present invention. Apparently, the described embodiments are merely some but not all of embodiments of the present invention. All other embodiments obtained by a person of ordinary skill in the art based on embodiments of the present invention without creative efforts shall fall within the protection scope of the present invention.

Experimental methods used in the following examples are conventional methods, unless otherwise specified. Reagents, materials, and the like used in the following examples are all commercially available, unless otherwise specified.

In the description of the present invention, it should be noted that the terms "first", "second", or the like, are only used for descriptive purposes, and do not indicate or imply relative importance.

### Example 1

(1) A negative electrode slurry 1 was prepared by using first graphite with a length-to-diameter ratio of 4 and a long axis of 12 µm as a negative electrode active material: A mixture of a mass ratio of 96.8% negative electrode active material, 1.2% conductive agent (conductive carbon black), and 2% binder (styrene-butadiene rubber) was mixed with water and then stirred to obtain an active material layer slurry with a viscosity ranging from 2000 mPa·s to 5000 mPa·s and a solid content ranging from 40% to 50%.
(2) A negative electrode slurry 2 was prepared by using second graphite with a length-to-diameter ratio of 1.5 and a long axis of 18 µm as a negative electrode active material: A mixture of a mass ratio of 96.8% negative electrode active material, 1.2% conductive agent (conductive carbon black), and 2% binder (styrene-butadiene rubber) was mixed with water and then stirred to obtain an active material layer slurry with a viscosity ranging from 2000 mPa·s to 5000 mPa·s and a solid content ranging from 40% to 50%.
(3) Both the negative electrode slurry prepared in step (1) and the negative electrode slurry prepared in step (2) were applied on a current collector, where the negative electrode slurry 2 was carried on the negative electrode slurry 1, and the negative electrode slurry 1 was carried on the current collector. Coating on both sides of the current collector was completed in a same manner. In a negative electrode plate obtained after coating, drying, and roll-pressing, a thickness of a first negative electrode active material layer was 30 µm, and a thickness of a second negative electrode active material layer was 30 µm.
(4) A positive electrode active material (lithium cobaltate), a conductive agent (conductive carbon black), and a binder (PVDF) were mixed according to a mass ratio of 96:2.5:1.5, dispersed in N-methylpyrrolidone (NMP) and stirred evenly, to prepare a slurry with a viscosity ranging from 2000 mPa·s to 7000 mPa·s and a solid content ranging from 70% to 80%. The slurry was applied evenly on surfaces of both sides of an aluminum foil of a positive electrode current collector, and the aluminum foil was baked at a temperature ranging from 100°C to 150°C for 4 hours to 8 hours, to make a positive electrode plate.
(5) After being rolled and die-cut, the positive electrode plate and the negative electrode plate obtained in the foregoing steps were assembled into a jelly roll through winding. After passing a short-circuit test, the jelly roll was packaged by using an aluminum-plastic film and then baked in an oven for removing moisture until a moisture standard required by solution injection was reached, and then an electrolyte solution was injected. After aging for 24 hours to 48 hours, charging was completed for the first time by using a process of hot pressing and forming to obtain an activated battery.

### Examples 2 to 6 and Comparative Examples 1 to 4

Differences between Examples 2 to 6 and Comparative Examples 1 to 4 and Example 1 lie in that the length-to-diameter ratio, the long axis of the first graphite and the second graphite, and the thickness of the first active material layer and the second active material layer. Details are shown in Table 1. Example 2 is not being part of the present invention.

### Comparative Example 5

Other operations were the same as those in Example 1. A difference lies in that the negative electrode plate is prepared as follows.

A negative electrode slurry was prepared by using graphite with a length-to-diameter ratio of 1.5 and a long axis of 18 µm as a negative electrode active material: A mixture of a mass ratio of 96.8% negative electrode active material, 1.2% conductive agent (conductive carbon black), and 2% binder (styrene-butadiene rubber) was mixed with water and then stirred to obtain an active material layer slurry with a viscosity ranging from 2000 mPa·s to 5000 mPa·s and a solid content ranging from 40% to 50%.

The foregoing prepared negative electrode slurry was applied on both sides of a current collector. In a negative electrode plate obtained after coating, drying, and roll-pressing, a thickness of a negative electrode active material layer was 60 µm.

### Comparative Example 6

Other operations were the same as those in Example 1. A differences lies in that the negative electrode plate is prepared as follows.

A negative electrode slurry was prepared by using graphite with a length-to-diameter ratio of 3 and a long axis of 12 µm as a negative electrode active material: A mixture of a mass ratio of 96.8% negative electrode active material, 1.2% conductive agent (conductive carbon black), and 2% binder (styrene-butadiene rubber) was mixed with water and then stirred to obtain an active material layer slurry with a viscosity ranging from 2000 mPa·s to 5000 mPa·s and a solid content ranging from 40% to 50%.

The foregoing prepared negative electrode slurry was applied on both sides of a current collector. In a negative electrode plate obtained after coating, drying, and roll-pressing, a thickness of a negative electrode active material layer was 60 µm.

### Performance test:

A battery cell prepared in the foregoing examples and comparative examples was fully charged at 0.5C, and a ratio of an energy E of discharging at 0.5C to a volume V of the battery cell was an energy density ED (Wh·L⁻¹).

A life test was performed on the foregoing prepared battery cell for 700 cycles by using charging at 3C and discharging at 1C.

The foregoing prepared battery cell was fully charged at 5C and discharged at 0.5C. After being charged and discharged for 20 times, the battery cell was dissected to check a status of lithium deposition.

**Table 1 Composition and performance test results of batteries in Examples and Comparative Examples**

| | Second graphite | | First graphite | | h2 (µm) | h1 (µm) | ED (Wh·L⁻¹⁾ | 700T cycling capacity retention rate | Status of lithium deposition |
|---|---|---|---|---|---|---|---|---|---|
| | Length-to-diameter ratio | Long axis (µm) | Length-to-diameter ratio | Long axis (µm) | | | | | |
| Example 1 | 1.5 | 18 | 4 | 12 | 30 | 30 | 735 | 86.3% | No lithium deposition |
| Example 2 | 1 | 18 | 3 | 12 | 30 | 30 | 730 | 86.7% | No lithium deposition |
| Example 3 | 2 | 18 | 5 | 12 | 30 | 30 | 737 | 85.9% | No lithium deposition |
| Example 4 | 1.5 | 15 | 4 | 5 | 30 | 30 | 733 | 86.9% | No lithium deposition |
| Example 5 | 1.5 | 25 | 4 | 15 | 30 | 30 | 739 | 85.7% | No lithium deposition |
| Example 6 | 1.5 | 18 | 4 | 12 | 20 | 40 | 730 | 87% | No lithium deposition |
| Comparative Example 1 | 3 | 18 | 6 | 12 | 30 | 30 | 722 | 78.3% | lithium deposition |
| Comparative Example 2 | 1.5 | 10 | 4 | 5 | 30 | 30 | 718 | 79.5% | lithium deposition |
| Comparative Example 3 | 1.5 | 30 | 4 | 20 | 30 | 30 | 725 | 75.3% | lithium deposition |
| Comparative Example 4 | 1.5 | 18 | 4 | 12 | 40 | 20 | 728 | 78.5% | lithium deposition |
| Comparative Example 5 | 1.5 | 18 | / | / | 60 | / | 712 | 76.5% | lithium deposition |
| Comparative Example 6 | / | / | 4 | 12 | / | 60 | 708 | 78.6% | lithium deposition |

The results of the foregoing examples and comparative examples show that, compared with conventional manners in Comparative Examples 5 and 6, Examples 1 to 6 prepared according to the present invention resolve problems of lithium deposition and a cycling capacity retention rate of a battery cell.

## Claims

1. A negative electrode plate, wherein the negative electrode plate comprises a current collector, a first active material layer, and a second active material layer, the first active material layer is disposed on a surface of at least one side of the current collector, and the second active material layer is disposed on a surface of the first active material layer;
the first active material layer comprises a first negative electrode active material, and a length-to-diameter ratio of the first negative electrode active material ranges from 3 to 5;
the second active material layer comprises a second negative electrode active material, and a length-to-diameter ratio of the second negative electrode active material ranges from 1.5 to 2; and
the length-to-diameter ratio refers to a ratio of a longest diameter inside a negative electrode active material particle (a) to a longest diameter perpendicular to the longest diameter (b); and the length-to-diameter ratio is obtained by using an image test software to characterize a scanning electron microscope cross section of the negative electrode active material particle.

2. The negative electrode plate according to claim 1, **characterized in that** a long axis of the first negative electrode active material ranges from 5 µm to 15 µm; and/or
a long axis of the second negative electrode active material ranges from 15 µm to 25 µm.

3. The negative electrode plate according to claim 1 or 2, **characterized in that** a particle size Dv50 of the first negative electrode active material ranges from 5 µm to 15 µm; and/or
a particle size Dv50 of the second negative electrode active material ranges from 15 µm to 25 µm.

4. The negative electrode plate according to any one of claims 1 to 3, **characterized in that** a ratio h2/h1 of a thickness h2 of the second active material layer to a thickness h1 of the first active material layer is 0.1 ≤ h2/h1 ≤ 1.

5. The negative electrode plate according to any one of claims 1 to 4, **characterized in that** a thickness h1 of the first active material layer ranges from 10 µm to 100 µm; and/or
a thickness h2 of the second active material layer ranges from 10 µm to 100 µm.

6. The negative electrode plate according to any one of claims 1 to 5, **characterized in that** the first active material layer further comprises a first conductive agent and a first binder; and/or
the second active material layer further comprises a second conductive agent and a second binder.

7. The negative electrode plate according to claim 6, **characterized in that** a mass percentage of each component in the first active material layer is: 90 wt%-99 wt% first negative electrode active material, 0.5 wt%-10 wt% first conductive agent, and 0.5 wt%-10 wt% first binder.

8. The negative electrode plate according to claim 6 or 7, **characterized in that** a mass percentage of each component in the first active material layer is: 92 wt%-99 wt% first negative electrode active material, 0.5 wt%-4 wt% first conductive agent, and 0.5 wt%-4 wt% first binder.

9. The negative electrode plate according to any one of claims 6 to 8, **characterized in that** a mass percentage of each component in the second active material layer is: 80 wt%-99 wt% second negative electrode active material, 0.5 wt%-10 wt% second conductive agent, and 0.5 wt%-10 wt% second binder.

10. The negative electrode plate according to any one of claims 6 to 9, **characterized in that** a mass percentage of each component in the second active material layer is: 92 wt%-99 wt% second negative electrode active material, 0.5 wt%-4 wt% second conductive agent, and 0.5 wt%-4 wt% second binder.

11. The negative electrode plate according to any one of claims 1 to 10, **characterized in that** the first negative electrode active material and the second negative electrode active material are the same or different; and
the first negative electrode active material and the second negative electrode active material are independently selected from at least one of graphite, soft carbon, hard carbon, silicon, silicon oxide, or silicon carbide.

12. The negative electrode plate according to any one of claims 1 to 10, **characterized in that** the first negative electrode active material and the second negative electrode active material are independently selected from graphite.

13. The negative electrode plate according to any one of claims 6 to 9, **characterized in that** the first conductive agent and the second conductive agent are the same or different; and
the first conductive agent and the second conductive agent are independently selected from at least one of conductive carbon black, acetylene black, Keqin black, conductive graphite, conductive carbon fiber, carbon nanotube, or metal powder.

14. The negative electrode plate according to any one of claims 6 to 9, **characterized in that** the first binder and the second binder are the same or different; and
the first binder and the second binder are independently selected from at least one of styrene-butadiene rubber, polyvinylidene fluoride, polyacrylonitrile, polystyrene-acrylate, or polyacrylic acid ester.

15. A battery, **characterized in that** the battery comprises the negative electrode plate according to any one of claims 1 to 14.

## Patentansprüche

1. Eine Negativelektrodenplatte, wobei die Negativelektrodenplatte einen Stromkollektor, eine erste Aktivmaterialschicht und eine zweite Aktivmaterialschicht beinhaltet, wobei die erste Aktivmaterialschicht auf einer Oberfläche von mindestens einer Seite des Stromkollektors angeordnet ist und die zweite Aktivmaterialschicht auf einer Oberfläche der ersten Aktivmaterialschicht angeordnet ist;
die erste Aktivmaterialschicht ein erstes Aktivmaterial der Negativelektrode beinhaltet und ein Länge-zu-Durchmesser-Verhältnis des ersten Aktivmaterials der Negativelektrode im Bereich von 3 bis 5 liegt;
die zweite Aktivmaterialschicht ein zweites Aktivmaterial der Negativelektrode beinhaltet und ein Länge-zu-Durchmesser-Verhältnis des zweiten Aktivmaterials der Negativelektrode im Bereich von 1,5 bis 2 liegt; und
das Länge-zu-Durchmesser-Verhältnis sich auf ein Verhältnis eines längsten Durchmessers innerhalb eines Aktivmaterialpartikels der Negativelektrode (a) zu einem längsten Durchmesser senkrecht zum längsten Durchmesser (b) bezieht; und das Länge-zu-Durchmesser-Verhältnis unter Verwendung einer Bildprüfsoftware erhalten wird, um einen Rasterelektronenmikroskop-Querschnitt des Aktivmaterialpartikels der Negativelektrode zu charakterisieren.

2. Negativelektrodenplatte gemäß Anspruch 1, **dadurch gekennzeichnet, dass** eine lange Achse des ersten Aktivmaterials der Negativelektrode im Bereich von 5 µm bis 15 µm liegt; und/oder
eine lange Achse des zweiten Aktivmaterials der Negativelektrode im Bereich von 15 µm bis 25 µm liegt.

3. Negativelektrodenplatte gemäß Anspruch 1 oder 2, **dadurch gekennzeichnet, dass** eine Partikelgröße Dv50 des ersten Aktivmaterials der Negativelektrode im Bereich von 5 µm bis 15 µm liegt; und/oder
eine Partikelgröße Dv50 des zweiten Aktivmaterials der Negativelektrode im Bereich von 15 µm bis 25 µm liegt.

4. Negativelektrodenplatte gemäß einem der Ansprüche 1 bis 3, **dadurch gekennzeichnet, dass** ein Verhältnis h2/h1 einer Dicke h2 der zweiten Aktivmaterialschicht zu einer Dicke h1 der ersten Aktivmaterialschicht 0,1 ≤ h2/h1 ≤ 1 ist.

5. Negativelektrodenplatte gemäß einem der Ansprüche 1 bis 4, **dadurch gekennzeichnet, dass** eine Dicke h1 der ersten Aktivmaterialschicht im Bereich von 10 µm bis 100 µm liegt; und/oder
eine Dicke h2 der zweiten Aktivmaterialschicht im Bereich von 10 µm bis 100 µm liegt.

6. Negativelektrodenplatte gemäß einem der Ansprüche 1 bis 5, **dadurch gekennzeichnet, dass** die erste Aktivmaterialschicht ferner ein erstes leitfähiges Mittel und ein erstes Bindemittel beinhaltet; und/oder
die zweite Aktivmaterialschicht ferner ein zweites leitfähiges Mittel und ein zweites Bindemittel beinhaltet.

7. Negativelektrodenplatte gemäß Anspruch 6, **dadurch gekennzeichnet, dass** ein Massenprozentsatz jeder Komponente in der ersten Aktivmaterialschicht beträgt: 90 Gew.-% bis 99 Gew.-% erstes Aktivmaterial der Negativelektrode, 0,5 Gew.-% bis 10 Gew.-% erstes leitfähiges Mittel und 0,5 Gew.-% bis 10 Gew.-% erstes Bindemittel.

8. Negativelektrodenplatte gemäß Anspruch 6 oder 7, **dadurch gekennzeichnet, dass** ein Massenprozentsatz jeder Komponente in der ersten Aktivmaterialschicht beträgt: 92 Gew.-% bis 99 Gew.-% erstes Aktivmaterial der Negativelektrode, 0,5 Gew.-% bis 4 Gew.-% erstes leitfähiges Mittel und 0,5 Gew.-% bis 4 Gew.-% erstes Bindemittel.

9. Negativelektrodenplatte gemäß einem der Ansprüche 6 bis 8, **dadurch gekennzeichnet, dass** ein Massenprozentsatz jeder Komponente in der zweiten Aktivmaterialschicht beträgt: 80 Gew.-% bis 99 Gew.-% zweites Aktivmaterial der Negativelektrode, 0,5 Gew.-% bis 10 Gew.-% zweites leitfähiges Mittel und 0,5 Gew.-% bis 10 Gew.-% zweites Bindemittel.

10. Negativelektrodenplatte gemäß einem der Ansprüche 6 bis 9, **dadurch gekennzeichnet, dass** ein Massenprozentsatz jeder Komponente in der zweiten Aktivmaterialschicht beträgt: 92 Gew.-% bis 99 Gew.-% zweites Aktivmaterial der Negativelektrode, 0,5 Gew.-% bis 4 Gew.-% zweites leitfähiges Mittel und 0,5 Gew.-% bis 4 Gew.-% zweites Bindemittel.

11. Negativelektrodenplatte gemäß einem der Ansprüche 1 bis 10, **dadurch gekennzeichnet, dass** das erste Aktivmaterial der Negativelektrode und das zweite Aktivmaterial der Negativelektrode gleich oder verschieden sind; und
das erste Aktivmaterial der Negativelektrode und das zweite Aktivmaterial der Negativelektrode unabhängig aus mindestens einem von Graphit, weichem Kohlenstoff, hartem Kohlenstoff, Silicium, Siliciumoxid oder Siliciumcarbid ausgewählt sind.

12. Negativelektrodenplatte gemäß einem der Ansprüche 1 bis 10, **dadurch gekennzeichnet, dass** das erste Aktivmaterial der Negativelektrode und das zweite Aktivmaterial der Negativelektrode unabhängig aus Graphit ausgewählt sind.

13. Negativelektrodenplatte gemäß einem der Ansprüche 6 bis 9, **dadurch gekennzeichnet, dass** das erste leitfähige Mittel und das zweite leitfähige Mittel gleich oder verschieden sind; und
das erste leitfähige Mittel und das zweite leitfähige Mittel unabhängig aus mindestens einem von leitfähigem Ruß, Acetylenruß, Keqin-Ruß, leitfähigem Graphit, leitfähiger Kohlenstofffaser, Kohlenstoffnanoröhre oder Metallpulver ausgewählt sind.

14. Negativelektrodenplatte gemäß einem der Ansprüche 6 bis 9, **dadurch gekennzeichnet, dass** das erste Bindemittel und das zweite Bindemittel gleich oder verschieden sind; und
das erste Bindemittel und das zweite Bindemittel unabhängig aus mindestens einem von Styrol-Butadien-Kautschuk, Polyvinylidenfluorid, Polyacrylnitril, Polystyrolacrylat oder Polyacrylsäureester ausgewählt sind.

15. Eine Batterie, **dadurch gekennzeichnet, dass** die Batterie die Negativelektrodenplatte gemäß einem der Ansprüche 1 bis 14 beinhaltet.

## Revendications

1. Une plaque-électrode négative, où la plaque-électrode négative comprend un collecteur de courant, une première couche de matériau actif, et une deuxième couche de matériau actif, la première couche de matériau actif est disposée sur une surface d'au moins un côté du collecteur de courant, et la deuxième couche de matériau actif est disposée sur une surface de la première couche de matériau actif ;
la première couche de matériau actif comprend un premier matériau actif d'électrode négative, et un rapport longueur au diamètre du premier matériau actif d'électrode négative est compris dans l'intervalle allant de 3 à 5 ;
la deuxième couche de matériau actif comprend un deuxième matériau actif d'électrode négative, et un rapport longueur au diamètre du deuxième matériau actif d'électrode négative est compris dans l'intervalle allant de 1,5 à 2 ; et
le rapport longueur au diamètre fait référence à un rapport d'un diamètre le plus long à l'intérieur d'une particule de matériau actif d'électrode négative (a) à un diamètre le plus long perpendiculaire au diamètre le plus long (b) ; et le rapport longueur au diamètre est obtenu en utilisant un logiciel de test d'image pour caractériser une section transversale au microscope électronique à balayage de la particule de matériau actif d'électrode négative.

2. La plaque-électrode négative selon la revendication 1, **caractérisée en ce qu'**un axe long du premier matériau actif d'électrode négative est compris dans l'intervalle allant de 5 µm à 15 µm ; et/ou
un axe long du deuxième matériau actif d'électrode négative est compris dans l'intervalle allant de 15 µm à 25 µm.

3. La plaque-électrode négative selon la revendication 1 ou la revendication 2, **caractérisée en ce qu'**une taille de particule Dv50 du premier matériau actif d'électrode négative est comprise dans l'intervalle allant de 5 µm à 15 µm ; et/ou une taille de particule Dv50 du deuxième matériau actif d'électrode négative est comprise dans l'intervalle allant de 15 µm à 25 µm.

4. La plaque-électrode négative selon l'une quelconque des revendications 1 à 3, **caractérisée en ce qu'**un rapport h2/h1 d'une épaisseur h2 de la deuxième couche de matériau actif à une épaisseur h1 de la première couche de matériau actif est 0,1 ≤ h2/h1 ≤ 1.

5. La plaque-électrode négative selon l'une quelconque des revendications 1 à 4, **caractérisée en ce qu'**une épaisseur h1 de la première couche de matériau actif est comprise dans l'intervalle allant de 10 µm à 100 µm ; et/ou
une épaisseur h2 de la deuxième couche de matériau actif est comprise dans l'intervalle allant de 10 µm à 100 µm.

6. La plaque-électrode négative selon l'une quelconque des revendications 1 à 5, **caractérisée en ce que** la première couche de matériau actif comprend en outre un premier agent conducteur et un premier liant ; et/ou
la deuxième couche de matériau actif comprend en outre un deuxième agent conducteur et un deuxième liant.

7. La plaque-électrode négative selon la revendication 6, **caractérisée en ce qu'**un pourcentage en masse de chaque composant dans la première couche de matériau actif est : 90 % en poids à 99 % en poids de premier matériau actif d'électrode négative, 0,5 % en poids à 10 % en poids de premier agent conducteur, et 0,5 % en poids à 10 % en poids de premier liant.

8. La plaque-électrode négative selon la revendication 6 ou la revendication 7, **caractérisée en ce qu'**un pourcentage en masse de chaque composant dans la première couche de matériau actif est : 92 % en poids à 99 % en poids de premier matériau actif d'électrode négative, 0,5 % en poids à 4 % en poids de premier agent conducteur, et 0,5 % en poids à 4 % en poids de premier liant.

9. La plaque-électrode négative selon l'une quelconque des revendications 6 à 8, **caractérisée en ce qu'**un pourcentage en masse de chaque composant dans la deuxième couche de matériau actif est : 80 % en poids à 99 % en poids de deuxième matériau actif d'électrode négative, 0,5 % en poids à 10 % en poids de deuxième agent conducteur, et 0,5 % en poids à 10 % en poids de deuxième liant.

10. La plaque-électrode négative selon l'une quelconque des revendications 6 à 9, **caractérisée en ce qu'**un pourcentage en masse de chaque composant dans la deuxième couche de matériau actif est : 92 % en poids à 99 % en poids de deuxième matériau actif d'électrode négative, 0,5 % en poids à 4 % en poids de deuxième agent conducteur, et 0,5 % en poids à 4 % en poids de deuxième liant.

11. La plaque-électrode négative selon l'une quelconque des revendications 1 à 10, **caractérisée en ce que** le premier matériau actif d'électrode négative et le deuxième matériau actif d'électrode négative sont identiques ou différents ; et
le premier matériau actif d'électrode négative et le deuxième matériau actif d'électrode négative sont indépendamment sélectionnés parmi au moins l'un des éléments : graphite, carbone mou, carbone dur, silicium, oxyde de silicium, ou carbure de silicium.

12. La plaque-électrode négative selon l'une quelconque des revendications 1 à 10, **caractérisée en ce que** le premier matériau actif d'électrode négative et le deuxième matériau actif d'électrode négative sont indépendamment sélectionnés parmi le graphite.

13. La plaque-électrode négative selon l'une quelconque des revendications 6 à 9, **caractérisée en ce que** le premier agent conducteur et le deuxième agent conducteur sont identiques ou différents ; et
le premier agent conducteur et le deuxième agent conducteur sont indépendamment sélectionnés parmi au moins l'un des éléments : noir de carbone conducteur, noir d'acétylène, noir de Keqin, graphite conducteur, fibre de carbone conductrice, nanotube de carbone, ou poudre métallique.

14. La plaque-électrode négative selon l'une quelconque des revendications 6 à 9, **caractérisée en ce que** le premier liant et le deuxième liant sont identiques ou différents ; et
le premier liant et le deuxième liant sont indépendamment sélectionnés parmi au moins l'un des éléments : caoutchouc de styrène-butadiène, fluorure de polyvinylidène, polyacrylonitrile, polystyrène-acrylate, ou ester d'acide polyacrylique.

15. Une batterie, **caractérisée en ce que** la batterie comprend la plaque-électrode négative selon l'une quelconque des revendications 1 à 14.
